# EUROPEAN PATENT APPLICATION

(11) **EP 4 492 334 A1**
(43) Date of publication of application: **15.01.2025**
(21) Application number: 23184424.2
(22) Date of filing: 10.07.2023
(51) Int. Cl.: G06V 10/764, G06V 10/82

(54) **METHODS AND SYSTEMS FOR PROVIDING A TRAINED FUNCTION CONFIGURED TO CLASSIFY A WHOLE SLIDE IMAGE**

(71) Applicant: Siemens Healthineers AG, 91301 Forchheim (DE)
(72) Inventor: Dr. Teichmann, Marvin, 91054 Erlangen (DE)
(74) Representative: Siemens Healthineers Patent Attorneys

(57) **Abstract**

Embodiments herein disclosed relate to computer-implemented method and corresponding systems for providing a trained function (TFA) which function is configured to provide a classification result (CR) for a whole slide image (WSI) depicting tissue according to a plurality of tissue types (HE, CA, OT). Methods and systems are based on generating (S30) intermediate classification results (ICR) by inputting the set (WSI_T) into a first trained function (TF1), selecting (S40) classification results (SCR) from the intermediate classification results (ICR), inputting (S50) image data extracted from the set (WSI_T) corresponding to the selected classification results (SCR) into a second trained function (TF2) so as generate predictive classification results, and adapting (S60) the second trained function (TF2) based on a comparison of the selected classification results (SCR) with the predictive classification results.

## Description

Various examples of the disclosure pertain to provide a trained function capable of classifying whole slide images. More specifically, various examples pertain to train such functions in a self-supervised or unsupervised manner. Further examples relate to the use of suchlike functions for classifying whole slide images.

In histopathology, a tissue sample of a patient is inspected to study a manifestation of a disease such as cancer.

Conventionally, a practitioner can inspect the tissue samples using a microscope. In further detail, thin tissue slides are prepared by sectioning a tissue sample and staining and fix-ating the slice section. Then, an image is acquired depicting the tissue slide. The result is often referred to as whole slide image. The digitization of such images makes it possible to digitally analyze and process tissue samples. This is referred to as digital pathology.

Recently, algorithmic analysis of digitized tissue samples has become possible. Reference techniques of digital pathology use Convolutional Neural Networks (CNNs) as an example of machine-learning (ML) algorithms. Such techniques are described in: Karen Simonyan and Andrew Zisserman. Very deep convolutional networks for large-scale image recognition. arXiv preprint arXiv:1409.1556, 2014. Such techniques are further described in: Kaiming He, Xiangyu Zhang, Shaoqing Ren, and Jian Sun. Deep residual learning for image recognition. CoRR, abs/1512.03385, 2015. Such techniques are further described in: Mingxing Tan and Quoc V Le. Efficientnet: Rethinking model scaling for convolutional neural networks. arXiv preprint arXiv:1905.11946, 2019. Such techniques are further described in: Ilija Radosavovic, Raj Prateek Kosaraju, Ross Girshick, Kaiming He, and Piotr Dollár. Designing network design spaces. In Proceedings of the IEEE/CVF Conference on Computer Vision and Pattern Recognition, pages 10428-10436, 2020.

Oftentimes, digital pathology requires processing large images, e.g., whole slide tissue images (WSI). A whole slide image depicts a microscopically magnified tissue slide of macroscopic scale, e.g., centimeters. Thus, the whole-slide image can include a large number of pixels. Whole-slide images typically come at a size of tens of thousands of pixels in each dimension. Tissue slides either from biopsies or resected tumor tissue are prepared on glass slides, which can be scanned by a digital microscope in high resolution (gigapixels) and high throughput. Because of their size and number, whole slide images are especially well-suited for data-hungry ML algorithms. They can be processed by an ML algorithm as a whole or on the basis of small image patches cut out from the large images.

It has been found that training ML algorithms to process whole slide images can be time consuming and/or error prone. The sheer amount of image data oftentimes requires large amounts of expensive annotations for supervised learning. Annotations - including ground-truth labels for the training process - are expensive and time consuming and pathology requires specific solutions with training and validation data for a myriad of specific tissue or cancer types, organs, resection versus biopsy and possibly parameters of the preparation of the physical tissue sample (fixation, dies, slicing etc.). For example, for a standard tumor recognition task which is used as intermediate representation in many ML-based pathology systems, the pathologist is required to provide local, ideally pixelwise ground-truth labels for the training process of the ML algorithm. In addition, obtaining high-resolution ground-truth labels can be challenging since there are many fine structures and areas which are hard to categorize, even for an expert.

Accordingly, it is an object of embodiments of the present invention to provide an improved training of ML algorithms (another word is "trained function") in digital pathology capable of segmenting whole-slide images to detect different tissue types which requires less, or no training data annotated by an expert. It is further an object of embodiments of the present invention to facilitate the classification of whole-slide images using trained functions.

This object is solved by a method for providing a trained function, a method for segmenting whole-slide images, corresponding systems, corresponding computer-program products, and computer-readable storage media according to the main claims. Alternative and/or preferred embodiments are object of the dependent claims.

In the following, the technical solution according to the present invention is described with respect to the claimed apparatuses as well as with respect to the claimed methods. Features, advantages, or alternative embodiments described herein can likewise be assigned to other claimed objects and vice versa. In other words, claims addressing the inventive method can be improved by features described or claimed with respect to the apparatuses. In this case, e.g., functional features of the method are embodied by objective units or elements of the apparatus.

The technical solution will be described both with regard to methods and systems for providing information and also with regard to methods and systems for providing trained functions. Features and alternate forms of embodiments of data structures and/or functions for methods and systems for providing can be transferred to analogous data structures and/or functions for methods and systems for providing trained functions. Analogous data structures can, in particular, be identified by using the prefix "training". Furthermore, the trained functions used in methods and system for providing information can, in particular, have been adjusted and/or trained and/or provided by methods and systems for adjustment of trained functions.

According to an aspect, a computer-implemented method for providing a trained function is provided, wherein the trained function is configured to provide a classification result for a whole slide image depicting tissue according to a plurality of tissue types. The method comprises a plurality of steps. One step is directed to obtain a set of whole slide images depicting tissue of unknown tissue types. Another step is directed to provide a first trained function configured to provide a classification result for a whole slide image depicting tissue according to a plurality of tissue types. Another step is directed to generate intermediate classification results by applying the first trained function to the set of whole slide images (i.e., by inputting the set of whole slide images into the first trained function). Another step is directed to select classification results from the intermediate classification results. Another step is directed to provide a second trained function configured to provide a classification result for a whole slide image depicting tissue according to the plurality of tissue types. Another step is directed to input image data extracted from the set of whole slide images into the second trained function so as generate predictive classification results, wherein the image data corresponds to the selected classification results. Another step is directed to adapt the second trained function based on a comparison of the selected classification results with the predictive classification results. Another step is directed to provide the adapted trained function as the trained function.

In particular, first and second trained functions may be segmentation algorithm. In general, a trained functions mimics cognitive functions that humans associate with other human minds. In particular, by training based on training data, the trained functions are able to adapt to new circumstances and to detect and extrapolate patterns. Other terms for trained function, may be machine-learned or machine learning function (abbreviated by ML function), trained machine learning model, trained mapping specification, mapping specification with trained parameters, function with trained parameters, algorithm based on artificial intelligence, or machine learned algorithm (abbreviated by ML algorithm).

In general, parameters of a trained function can be adapted by way of training. In particular, supervised training, semi-supervised training, unsupervised training, reinforcement learning and/or active learning can be used. Furthermore, representation learning (an alternative term is "feature learning") can be used. In particular, the parameters of the trained functions can be adapted iteratively by several steps of training.

In particular, a trained function can comprise a neural network, a support vector machine, a decision tree and/or a Bayesian network, and/or the trained function can be based on k-means clustering, Qlearning, genetic algorithms and/or association rules. In particular, a neural network can be a deep neural network, a convolutional neural network or a convolutional deep neural network. Furthermore, a neural network can be an adversarial network, a deep adversarial network and/or a generative adversarial network.

As a general rule, the neural networks include multiple layers. The input to a first layer is the input image (in this case a whole slide image). Each layer can apply one or more mathematical operations on the input values, e.g., convolutions, nonlinear excitations, pooling operations, to give just a few examples. The input to a layer can be formed by the output of a preceding layer (feed-forward). Feedback of values or skip-connection skipping layers are possible.

A neural network for digital pathology, i.e., as may be comprised in the trained function algorithm, may infer at least one semantic histopathology feature. The at least one semantic histopathology feature can describe whether the tissues sample is a manifestation of a disease. It would be possible to segment tissue in a whole slide image according to various types. Healthy and/or unhealthy tissue may be detected and specifically localized. In particular, it would be possible to employ a convolutional neural network as trained function in the form of a ML segmentation algorithm. For instance, ResNet-18 may be used, see Ayyachamy, Swarnambiga, et al. "Medical image retrieval using Resnet-18." Medical Imaging 2019: Imaging Informatics for Healthcare, Research, and Applications. Vol. 10954. International Society for Optics and Photonics, 2019. In particular, a VGG-16 or VGG-19 CNN could be used, see: Mateen, Muhammad, et al. "Fundus image classification using VGG-19 architecture with PCA and SVD." Symmetry 11.1 (2019): 1; or Kaur, Taranjit, and Tapan Kumar Gandhi. "Automated brain image classification based on VGG-16 and transfer learning." 2019 International Conference on Information Technology (ICIT). IEEE, 2019.

The first and second trained functions may have the same basic structure/architecture/configurations but different training stages. In other words, first and second trained functions may differ in the parameters to be adjusted in the training processes by adapting first and second trained functions. In particular, first and second trained functions may be configured to provide a classification result for a whole slide image depicting tissue according to the same plurality of tissue types.

Whole-slide images to be processed by the first and/or second trained functions may be two-dimensional digital images having a plurality of pixels. Whole slide images could have a size of at least 4.000 x 4.000 pixels, or at least 10.000 x 10.000 pixels, or at least 1E6 x 1E6 pixels. A whole-slide image may image a tissue slice or slide of a patient.

The preparation of the tissue slices from the tissue samples can comprise the preparation of a section from the tissue sample (for example with a punch tool), with the section being cut into micrometer-thick slices, the tissue slices. Another word for section is block or punch biopsy. Under microscopic observation, a tissue slice can show the fine tissue structure of the tissue sample and, in particular, the cell structure or the cells contained in the tissue sample. When observed on a greater length scale, a whole-slide image can show an overview of the tissue structure and tissue density.

The preparation of a tissue slice further may comprise the staining of the tissue slice with a histopathological staining. The staining in this case can serve to highlight different structures in the tissue slice, such as, e.g., cell walls or cell nuclei, or to test a medical indication, such as, e.g., a cell proliferation level. Different histopathological stains are used for different purposes in such cases.

To create the whole-slide image, the stained tissue slices are digitized or scanned. To this end, the tissue slices are scanned with a suitable digitizing station, such as, for example, a whole-slide scanner, which preferably scans the entire tissue slice mounted on an object carrier and converts it into a pixel image. In order to preserve the color effect from the histopathological staining, the pixel images are preferably color pixel images. Since in the appraisal both the overall impression of the tissue and also the finely resolved cell structure is of significance, the individual images contained in the histopathology image data typically have a very high pixel resolution. The data size of an individual image can typically amount to several gigabytes.

In general, a whole-slide image may depict multiple tissue types of relevance for the diagnostic process in digital pathology. The trained functions considered here according to some embodiments may be supposed to identify a plurality of these tissue types and provide the segmentation result as segmentation or segmentation mask. 'A plurality' in this regard may mean at least two tissue types. In particular, the trained functions may be configured to segment a whole slide image to distinguish between a type of "cancerous" and another type of "non-cancerous" or "healthy" tissue.

There are other examples possible. For instance, it would be possible to segment a whole slide image to determine tissue that is infiltrated by immune cells, as a respective tissue type. Further tissue types may relate to blood vessels, connective tissue, necrotic tissue, etc. present in the whole-slide image. It would further be possible to segment regions of the whole-slide image that do not show tissue altogether, i.e., "no tissue" tissue types. The particular types and number of types of the tissue to be distinguished by the trained functions depend on the training of the trained functions - and also on the histopathological stain used for the whole-slide image.

Unknown tissue type may, in particular, mean that the whole-slide images of the set have not been annotated or segmented (either by an expert or by an algorithm).

A classification result may identify a plurality of regions in the whole-slide image pertaining to at least one tissue type.

According to some examples, the classification results may comprise segmentations of the whole slide images comprised in the set according to the plurality of tissue types. Specifically, the classification results may comprise a segmentation mask delineating regions in the respective whole slide image according to the plurality of tissue types. Multiple regions can be defined in the classification result. Different regions may be associated with different tissue types.

The annotation may thus comprise multiple segments/regions of the whole-slide image.

According to some examples, the classification result comprises outlines or segmentation masks of one or more cancerous cells or tumor cells.

According to some examples, the classification result does not involve manual annotations and/or is based on automated image processing of image data pertaining to the tissue slice.

According to some examples, selecting may comprise identifying one or more classification results in the intermediate classification results (and corresponding image data) according to (by applying) a predetermined criterion. According to some examples, the predetermined criterion may determine/quantify the benefit of a classification result for training/adapting the second trained function.

Extracting image data for providing the extracted image data to be input in the second trained function may mean identifying entire whole slide images and/or parts of whole slide images of the set which correspond to the selected classification results. In particular, this may comprise providing image data corresponding to one or more segmentations comprised in the selected classification results.

According to some examples, adapting the second trained function may comprise providing a predetermined loss function defining a comparison between a respective one of the predictive classification results and the corresponding selected classification result in the form of a loss value and iteratively minimizing the loss value by adapting one or more parameters of the second trained function.

Respective techniques of adapting parameters of trained functions are, in principle, well known in the art and need not be described here in further detail.

Using one trained function as pre-classification instance for the other together with the automated selection of classification results solves tumor segmentation problem in an unsupervised fashion. That is, no manual annotation at all is needed for the system to learn. This has three critical advantages. Firstly, this saves annotation effort and allows to utilize very large amount of data. Secondly, the selection process enables to specifically use only parts of the data by using distinct whole-slide images or even only distinct parts of whole-slide images making the method is highly fault-tolerant towards imperfect data and more efficient. Thirdly, this enables to deploy self-learning and improving systems which are capable of learning and improving their diagnostic quality and to adapt to local conditions and requirements.

According to an aspect, the method further comprises, prior to the step of providing the trained function a step of replacing the first trained function with the adapted trained function (with the adapted trained function becoming the (new) first trained function) and the second trained function with the first trained function (with the first trained function becoming the (new) second trained function), and a step of repeating the steps of generating the intermediate classification results (with the new first trained function), selecting the selected classification results, inputting the image data into the (new) second trained function, and adapting the (new) second trained function.

In other words, it is proposed that once the second trained function has been adapted it takes the role of the first trained function and the first trained function takes the role of the second trained function. In other words, the student (=the second trained function) in one iteration takes the role of the teacher in the next iteration and the teacher takes the role of student.

Thereby, according to some examples, the steps of replacing and repeating are iteratively performed a plurality of times.

By switching the roles of first and second trained functions, the knowledge obtained by the trained functions can be distilled very efficiently. This enables a further improved training process and a better usage of the available data.

According to an aspect, the method further comprises obtaining comparative image data of known tissue type, wherein the step of inputting image data comprises inputting the comparative image data into the second trained function so as to generate further predictive classification results, and the step of adapting comprises adapting the second trained function based on a comparison of the further classification results with the known tissue type.

According to some examples, obtaining comparative image data may comprise obtaining a set of comparative whole slide images of known tissue type and extracting the comparative image data from the whole slide images of the comparative set.

According to some examples, the known tissue type may be obtained by an external classification different to the generation of a classification result by applying the first and/or second trained functions. According to some examples, the known tissue type may be verified by expert annotation. The known tissue type may be comprised in the plurality of tissue types.

The comparative set of whole slide images may comprise different/additional whole slide images as compared to the set of whole slide images.

With the usage of the comparative set, additional knowledge may be injected which can be used specifically for training the second trained functions. As the tissue type of the comparative set is already known, this data does not have to be pre-classified by the first trained function which reduces the bias during training and improves the performance of the finally provided trained function in inference.

According to some examples, the whole slide images of the comparative set respectively only depict tissue of the known tissue type.

In other words, the comparative whole slide images are uniform in terms of the depicted tissue type. This has the advantage of an easier classification of the whole-slide images, as it is not required to segment image regions of different tissue types.

According to some examples, the step of selecting comprises selecting, from the intermediate classification results, selected classification results relating to a tissue type different than the known tissue type.

With that, a selection of results and corresponding image da-ta can be made which is beneficial for training the second trained function in view of the known tissue type. Accordingly, orthogonal training data may automatically be selected which provides for an efficient training of the second trained function.

According to an aspect, the known tissue type relates to healthy tissue.

According to some examples, "healthy" may mean that the tissue depicted in the whole slide image is medically inconspicuous. According to some examples, "healthy" may mean that the medical image WSI does not comprise (or indicate) any medical findings. According to some examples, "healthy" may mean that the medical image dataset does not comprise (or indicate) any medical abnormalities. In particular, "healthy" may relate to healthy tissue which does not show any pathological aberration. In other words, healthy tissue may be tissue which does not comprise unhealthy tissue (comprising one or more pathological aberrations). Specifically, healthy tissue may comprise only cells which do not show any pathological aberration. According to some examples "healthy" may be one of the plurality of tissue types.

Healthy tissue may be used as reference data for the training scheme which can be securely classified and is readily available in practice. Thereby, image data relating to healthy tissue may be extracted from whole slide images that do not depict unhealthy tissue at all. Such whole slide images are typically readily available and are easy to annotate as they do not require to delineate different tissue types. This means that manual annotations are not required for the healthy-tissue WSIs. This allows training on a much greater corpus of data. It is further not required to query additional ground-truth labels associated with the healthy-tissue WSIs from an expert. Alternatively, image data relating to healthy tissue may also be obtained from whole slide images depicting healthy and unhealthy tissue, of course.

According to an aspect, the step of generating the intermediate classification results further comprises obtaining certainty measures for the intermediate classification results, and, in the step of selecting, selecting the selected classification results based on the certainty measures.

A certainty measure (or confidence measure, or confidence level, or certainty score, or trust level) may indicate how confident the first trained function is in predicting the respective intermediate classification result for the underlying input data. Accordingly, each intermediate classification result may be associated to a certainty measure. In other words, the certainty measure may indicate how "safe" the classification result is.

A certainty measure, according to some examples, may comprise a numerical value or a collection of numerical values (e.g., a vector) that indicate, according to a model or algorithm, the degree of certainty or uncertainty a certain intermediate result is afflicted with and/or, generally, the quality of a certain intermediate classification result. According to some examples, obtaining the certainty measures may comprise assigning a value to each intermediate result quantifying the certainty (or confidence) of the respective classification result.

The certainty measure can be based on the output layer of the trained function(s). For instance, a possible confidence measure associated, e.g., to the prediction of a tissue type of the plurality of tissue types may be the output of a logit function, which can be implemented in the final layer of an artificial neural network of the respective trained functions. A more sophisticated confidence measure can be computed on the basis of a probabilistic interpretation of the output of the logit function.

Alternatively, certainty measures may be obtained using a separate module. Specifically, suchlike module may comprise a softmax unit, which is configured to determine at least one certainty measure based on a softmax action selection, and/or comprises a Bayesian unit, which is configured to determine at least one certainty measure based on Bayesian inference.

In a softmax action selection a statistical approach is taken. One can, e.g., assume that the logits output by the logit function follow a Boltzmann distribution and then associate the confidence measure to a likelihood found using logistic regression. Another possibility is to use Bayesian inference. There are different Bayesian-based approaches available, which are purported to yield very strong confidence levels associated with the predictions of artificial neural networks.

By introducing certainty measures the quality and, therewith, the value of a certain result and the underlying image data for training can be assessed. This makes it possible to select those intermediate results which are best suited for the training of the second trained function.

According to an aspect, selecting the selected classification results based on the certainty measures may comprise comparing the certainty measures against a predetermined certainty threshold and selecting the selected classification results based on the comparison. Specifically, intermediate classification results may be selected as selected classification results the certainty measure of which is above the certainty threshold.

According to some examples, the step of providing comprises re-trained the adapted trained function based on high-certainty classification results the certainty of which is above a high-certainty threshold which represents a higher certainty than the certainty threshold.

In other words, classification results and corresponding image data of high quality are used for fine-tuning the trained function before deployment. This may improve the overall quality of the finally provided trained function. According to some examples, high-certainty classification results may be collected from intermediate classification results of multiple repeat steps.

According to an aspect, the step of generating the intermediate classification results further comprises obtaining certainty measures for the intermediate classification results, and, in the step of adapting, the second trained function is additionally adapted based on the certainty measure.

In other words, the certainty measures may be used in the training of the second trained function. Specifically, "based on the certainty measure" may mean weighting the intermediate classification results (or the selected classification results) according to the respectively corresponding certainty measure upon adapting the trained function. This may mean that image data/results with higher certainty measures have a higher impact (are weighted higher) upon adapting the second trained function than image data/results with lower certainty measures.

According to an aspect, the step of adapting comprises calculating a loss based on corresponding pairs of the selected classification results and the predictive classification results, and weighting the loss based on the certainty measure corresponding to the respective selected classification result.

By including the certainty measure in the training process, information about how "safe" a particular prediction is may be leveraged. With that, it can be assured that results of high certainty systematically contribute more to the training than results with lower certainty (which may still have a certainty measure high enough to be selected, though).

According to an aspect, the step of obtaining the certainty measures comprises providing a trained certainty calculation module configured to attribute a classification measure to classification results in whole slide images.

According to some examples, the certainty calculation module may be configured to determine a certainty measure based on a distribution of input and/or output parameters of the respective trained function. According to some examples, the certainty calculation module may comprise an out-of-distribution module configured to detect uncertain input and/or output da-ta based on distributions of input and/or output parameters of the respective trained function.

According to some examples, the certainty calculation module may be configured to determine a certainty measure for a classification result based on image data corresponding to the respective classification result. In particular, the certainty calculation module may be configured to extract at least one parameter from the image data corresponding to the respective classification result, compare the at least one parameter to a distribution of the at least one parameter, and determine the certainty measure based on the comparison. Thereby the kind of parameter, the distribution, and/or a metric for comparing to the distribution may be learnt. Specifically, the distribution may be obtained from prior applications of the respective trained function.

Further, according to some examples, the certainty calculation module may be configured to determine a certainty measure for a classification result based on the classification result itself or any intermediate processing result. In particular, the certainty classification module may be configured to extract at least one output parameter from the classification result, compare the at least one output parameter to a distribution of the at least one output parameter, and determine the certainty measure based on the comparison. Thereby the kind of output parameter, the distribution, and/or a metric for comparing to the distribution may be learnt. Specifically, the distribution may be obtained from prior applications of the respective trained function.

By using a dedicated certainty calculation module, the certainty of a classification result may be objectively determined. This enables a more reliable valuation of the results and, hence, an improved selection of appropriate classification results for further training. Specifically, this may allow for an autonomous identification of out-of-distribution events the respective trained function has not been prepared for and where it can be expected that it performs poorly.

According to some examples, the certainty calculation module comprises a Bayesian model.

According to some examples, the uncertainty module includes a Bayesian model. Such a Bayesian model is based on an artificial Bayesian network. A Bayesian network is a probabilistic graphical model that represents a set of variables and their conditional dependencies via a directed acyclic graph with the variables as vertices or nodes and the dependencies as edges. Each node of the network is assigned to a conditional probability distribution of the random variable which it represents, given the random variables at the parent node. The distribution can be arbitrary. However, discrete or normal distributions are often used. Parents of a vertex are those vertices with an edge leading to the vertex. A Bayesian network is used to represent the common probability distribution of all variables involved as compactly as possible using conditional dependencies. The conditional (in)dependency of subsets of the variables is combined with a priori knowledge.

The Bayesian model is trained to identify uncertain classification results and, therewith, corresponding uncertainty regions of image data. Uncertainty regions are regions which the trained function is not be able to segment with sufficient reliability. Uncertainty can be determined by extracting feature data at different layers of the Bayesian model and determining a statistical distribution based on these da-ta. Then, uncertainty can be calculated as standard deviation of the mentioned statistical distribution.

Bayesian models enable to model a causal relationship among random variables using conditional probabilities. Thus, they are useful to understand how an individual inaccuracy or failure propagates through the layers of the trained function and how significantly it affects the outcome. As such, Bayesian models are capable of reliably predicting the certainty or confidence of output provided by complex systems like the first and second trained functions.

According to some examples, the certainty calculation module, preferably comprising a Bayesian uncertainty model, comprises at least one of:
- a specialized spatial segmentation loss algorithm,
- a feature pyramid pooling algorithm,
- a Monte Carlo Dropout algorithm,
- a Monte Carlo Depth algorithm,
- a Deep Ensemble algorithm.

In case the learning process comprises a specialized spatial segmentation loss algorithm, the AI-based uncertainty model is adapted to generate segmentations corresponding to the shape and extension of the annotations provided by the first trained function. The specialized spatial segmentation loss algorithm may be performed with pre-annotated whole slide images as input data and whole slide images including classified segments as output data. The mentioned input and output data, appropriately prepared as labelled data can be also used as training data for training the specialized spatial segmentation loss algorithm, whereby the medical images including classified segments can be used for evaluation of output data of the spatial segmentation loss algorithm during training.

The algorithm of feature pyramid pooling enables to learn coarse annotations well and to generalize to unannotated regions in an annotated medical image. The method of pyramid pooling is described in Hanchao Li, Pengfei Xiong, Jie An, and Lingxue Wang, "Pyramid attention network for semantic segmentation", arXiv-preprint arXiv:1805.10180. Feature pyramid pooling is used to perform spatial pyramid attention structure on high level output and combining global pooling to learn a better feature representation and a global attention upsample module on each decoder layer to provide global context as a guidance of low-level features to select category localization details. The feature pyramid pooling algorithm is used with feature maps as input data and output da-ta. The mentioned input and output data, appropriately prepared as labelled data, can be also used as training data for training the feature pyramid pooling algorithm.

The Monte-Carlo dropout and/or Monte Carlo Depth algorithm and/or Deep Ensemble learning approach is used for determining uncertainty regions. A Monte-Carlo dropout method includes an extraction of feature data in different layers of an artificial neural network. The extracted feature data are used to determine a statistical distribution of the features also called sample variance. Based on the statistical distribution, an uncertainty can be calculated as standard deviation.

The Monte Carlo Dropout algorithm receives feature maps of different stages of the uncertainty model as input data and generates feature maps as output data. The mentioned input and output data, appropriately prepared as labelled data, can be also used as training data for training the Monte Carlo Dropout algorithm.

The Monte Carlo Depth algorithm also receives feature maps of images as input data and output data. The mentioned input and output data, appropriately prepared as labelled data, can be also used as training data for training the Monte Carlo Depth algorithm.

Deep Ensemble works with a plurality, for example fifteen, base-learners. These base-learners include parallel working AI-based models, preferably artificial neuronal networks. Then Bayesian inference is conducted on these base-learners. Based on the statistics of different results of different base-learners, sample variance is used as an uncertainty metric. The Deep Ensemble algorithm is performed using a set of input data including different subsets of image data or feature maps for feeding the so-called base-learners. Further, also the output data include different subsets of image data or feature maps, or alternatively a map indicating sample variance of the input data. The mentioned input and output data, appropriately prepared as labelled data, can also be used as training data for training the Deep Ensemble algorithm.

The aforementioned examples for certainty modules enable to reliably attribute confidence values to the classification results. Thereby, different examples may bring about different advantages, for instance feature pyramid pooling, Monte Carlo dropout or Monte Carlo depth are more interwoven with the trained function. Therefore, they may require less training. Deep ensemble is more independent requiring fewer modifications to the trained functions.

According to an aspect, the certainty calculation module comprises a novelty detection algorithm configured to detect an anomaly in applying the (first) trained function, and the certainty measures are computed based on the detection results of the novelty detection algorithm.

Specifically, computing the certainty measure based on the detection results may comprise attributing lower certainty measures to image data and/or classification results for which an anomaly was detected upon applying the (first) trained function (compared to image data and/or classification results for which this is not the case).

According to some examples, the novelty detection algorithm may be configured to detect input and/or output parameters of the (first) trained function which are underrepresented in the training of the first trained function.

In other words, the novelty detection algorithm may be configured to detect, in particular, input data, in particular, input image data, the trained functions are not used to in the sense of that they have not seen that kind of input data during training to a significant extent or at all.

According to some examples, the novelty detection may be configured to detect an incongruity in the behaviour of the (first) trained function.

According to some examples, the novelty detection algorithm may again be based on a Bayesian model. Specifically, e.g., through unsupervised learning, an endogenous and unsupervised Bayesian model may be trained that represents interrelations between image data and the processing of the image data by the trained function. This Bayesian model may then be used to detect, an incongruity of a behaviour of the (first) trained function.

According to some examples, the novelty-detection algorithm comprises an autoencoder neural network algorithm comprising an encoder branch configured to encode an input data and a decoder branch configured to decode an encoded representation of the input data output by the encoder branch, wherein an anomaly is detected based on a reconstruction error between the input data and an output da-ta output by the decoder branch.

With the usage of a novelty detection algorithm circumstances can be automatically identified which are less familiar or not familiar for the (first) trained function. Under such circumstances, it is likely that the (first) trained function will not be able to deliver confident results. Thus, identifying these circumstances leads to reliable certainty measures and, in turn, to an improved selection of classification results for the further training of the second trained function.

According to an aspect, the method further comprises respectively defining a plurality of tiles in the whole slide images of the set of whole slide images. Thereby, the step of generating intermediate classification results comprises generating an intermediate classification result for each one of at least part of the tiles, and the step of inputting image data comprises inputting the image data of the tiles corresponding to the selected classification results into the second trained function.

According to some examples, obtaining comparative image data of known tissue type may comprise respectively defining a plurality of comparative tiles in whole slide images of a set of comparative whole slide images of known tissue type, wherein the image data corresponds to the image data of the comparative tiles.

The tiles may be conceived as subareas of the respective whole slide image. Tiles also comprise image data in the form of pixels. Tiles are typically much smaller than the underlying whole slide images. Tiles may be defined by laying a regular grid over the underlying whole slide image. Each tile may have the same size.

With the tile-wise processing, the large whole-slide images may be portioned in smaller parts which are easier to process from a computational perspective. Further, it becomes easier to get good intermediate classification results since individual tiles may be much more homogenous than an entire whole slide image. For example, it might still be possible to identify tiles useful for further training the second function even if the underlying whole slide image shows portions which cannot be readily classified by the first trained function.

According to an aspect, a computer-implemented method for providing a classification result for a whole slide image depicting tissue according to a plurality of tissue types is provided. The method comprises a plurality of steps. One step is directed to provide a trained function according to any one of the aspects and examples herein described. Another step is directed to obtain a whole slide image to be classified. Another step is directed to apply the trained function to the whole slide image so as to obtain a classification result. Another step is directed to provide the classification result.

According to an aspect, a computer implemented method for providing training data for training a segmentation algorithm is provided, wherein the segmentation algorithm is to be trained for segmenting a whole-slide image depicting a tissue of multiple tissue types in accordance with a plurality of different tissue types. The method comprises a plurality of different steps. One step is directed to obtain a set of whole slide images depicting tissue of unknown tissue types. Another step is directed to provide a first trained function configured to provide a classification result for a whole slide image depicting tissue according to a plurality of tissue types. Another step is directed to generate intermediate classification results by applying the first trained function to the set of whole slide images (i.e., by inputting the set of whole slide images into the first trained function). Another step is directed to select classification results from the intermediate classification results. Another step is directed to provide the training data based on the selected classification results and corresponding image data extracted from the whole slide images of the set of whole slide images.

According to an aspect, the method further comprises obtaining comparative image data of known tissue type, wherein the training data is additionally provided based on the comparative image data and a corresponding classification result indicating the known tissue type.

According to an aspect, annotation assistance device is provided for segmenting a whole-slide image depicting tissue of multiple types in accordance with a plurality of different tissue types. The system comprises an interface unit and a computing unit. The interface unit is configured to receive a trained function provided according to any one of the aspects and examples herein described and the whole-slide image. The computing unit is configured to apply the trained function to the whole-slide image so as to segment the whole-slide image in accordance with the plurality of different tissue types.

According to an aspect, a system for providing a trained function configured to provide a classification result for a whole slide image depicting tissue according to a plurality of tissue types is provided. The system comprises an interface unit and computing unit. The interface unit is configured to receive a set of whole slide images depicting tissue of unknown tissue types. The computing unit is configured to obtain a first trained function configured to provide a classification result for a whole slide image depicting tissue according to a plurality of tissue types, generate intermediate classification results by inputting the set into the first trained function, select classification results from the intermediate classification results, obtain a second trained function configured to provide a classification result for a whole slide image depicting tissue according to a plurality of tissue types, input image data extracted from the set corresponding to the selected classification results into the second trained function so as generate predictive classification results, adapt the second trained function based on a comparison of the selected classification results with the predictive classification results, and provide the adapted trained function as the trained function via the interface unit.

The computing unit may be realized as a data processing system or as a part of a data processing system. Such a data processing system can, for example, comprise a cloud-computing system, a computer network, a computer, a tablet computer, a smartphone and/or the like. The computing unit can comprise hardware and/or software. The hardware can comprise, for example, one or more processors, one or more memories and combinations thereof. The one or more memories may store instructions for carrying out the method steps according to the invention. The hardware can be configurable by the software and/or be operable by the software. Generally, all units, sub-units or modules may at least temporarily be in data exchange with each other, e.g., via a network connection or respective interfaces. Consequently, individual units may be located apart from each other.

The interface unit may comprise an interface for data exchange with a local server or a central web server via inter-net connection for receiving the whole slide images and/or trained functions. The interface unit may be further adapted to interface with one or more users of the system, e.g., by displaying the result of the processing by the computing unit to the user (e.g., in a graphical user interface) or by allowing the user to adjust parameters for image processing or visualization, for making annotations or aligning image data, and/or to select whole-slide images for processing.

According to other aspects, the invention further relates to a digital pathology image analysis system comprising at least one of the above systems and a digital pathology image system (or digital pathology information system) configured to acquire, store and/or forward whole-slide images. Thereby, the interface unit is configured to receive whole-slide images form the digital pathology image system.

According to some examples, the digital pathology image system comprises one or more archive stations for storing whole-slide images which may be realized as a cloud storage or as a local or spread storage. Further, the digital pathology image system may comprise one or more imaging modalities, such as a slide scanning apparatus or the like.

According to another aspect, the present invention is directed to a computer program product comprising program elements which induce a computing unit of a system to perform the steps according to one or more of the method aspects and examples herein described, when the program elements are loaded into a memory of the computing unit.

According to another aspect, the present invention is directed to a computer-readable medium on which program elements are stored that are readable and executable by a computing unit of a system according to one or more method aspects and examples herein described, when the program elements are executed by the computing unit.

The realization of the invention by a computer program product and/or a computer-readable medium has the advantage that already existing providing systems can be easily adapted by software updates in order to work as proposed by the invention.

The computer program product can be, for example, a computer program or comprise another element next to the computer program as such. This other element can be hardware, e.g., a memory device, on which the computer program is stored, a hardware key for using the computer program and the like, and/or software, e.g., a documentation or a software key for using the computer program. The computer program product may further comprise development material, a runtime system and/or databases or libraries. The computer program product may be distributed among several computer instances.

Characteristics, features, and advantages of the above-described invention, as well as the manner they are achieved, become clearer and more understandable in the light of the following description of embodiments, which will be described in detail with respect to the figures. This following description does not limit the invention on the contained embodiments. Same components, parts or steps can be labeled with the same reference signs in different figures. In general, the figures are not drawn to scale. In the following:
Figure 1 schematically depicts a general workflow of processing whole slide images according to an example,
Figure 2 schematically shows a flowchart of a method for providing a trained function according to an embodiment,
Figure 3 schematically shows a flowchart of a method for providing a trained function according to an embodiment,
Figure 4 schematically shows a data flow diagram of a method for providing a trained function according to an embodiment,
Figure 5 schematically shows a method for providing training data according to an embodiment,
Figure 6 schematically shows a method for providing a classification result according to an embodiment,
Figure 7 schematically shows a trained function according to an embodiment,
Figure 8 schematically shows a system for providing a trained function according to an embodiment, and
Figure 9 schematically shows an annotation assistance device in a digital pathology image system according to an embodiment.

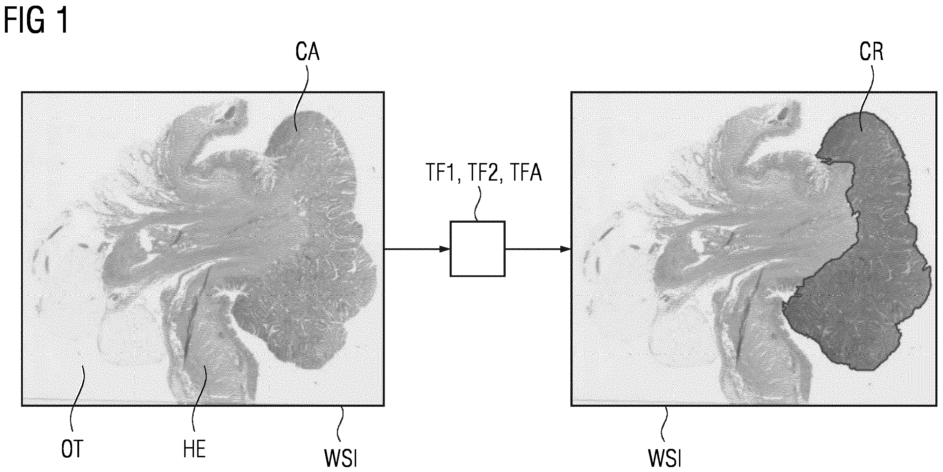

In Figure 1, schematic representations of whole slide images WSI are shown. In general, a whole slide image depicts tissue slices prepared from tissue samples of a patient. The slices may be prepared by cutting tissue samples into micrometer-thick slices. The whole slide image WSI depicts the tissue slices in microscopic observation. Accordingly, a tissue slice can show the fine tissue structure of the tissue sample and in particular the cell structure or the cells contained in the tissue sample.

In general, a whole slide image will show different tissue types, such as healthy tissue HE with healthy cells, cancerous tissue CA with cancerous cells and others OT, such as amorphous tissue or necrotic tissue.

As shown in Figure 1, it is a task of the trained functions TF1, TF2, TFA of embodiments of the invention to classify whole slide images WSI so as to identify tissue of at least one tissue type and, thereby, provide a classification result CR according to a plurality of tissue types (i.e., tissue of the at least one tissue type and tissue not of the at least one tissue type). As shown in Figure 1, the classification result CR may be in the form of a segmentation. For instance, the trained functions TF1, TF2, TFA may be configured to identify cancerous tissue CA in whole slide images WSI and mark these accordingly. The classification result CR may be provided in the form of an annotated whole slide image WSI' with the cancerous tissue CA highlighted.

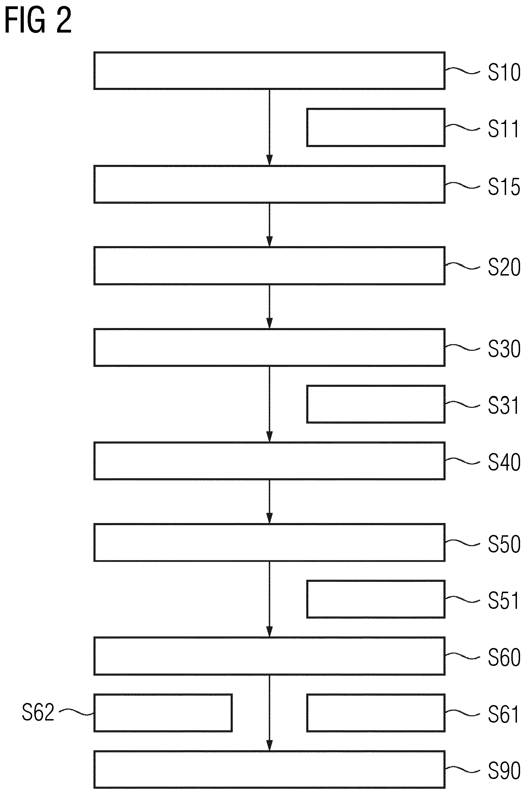

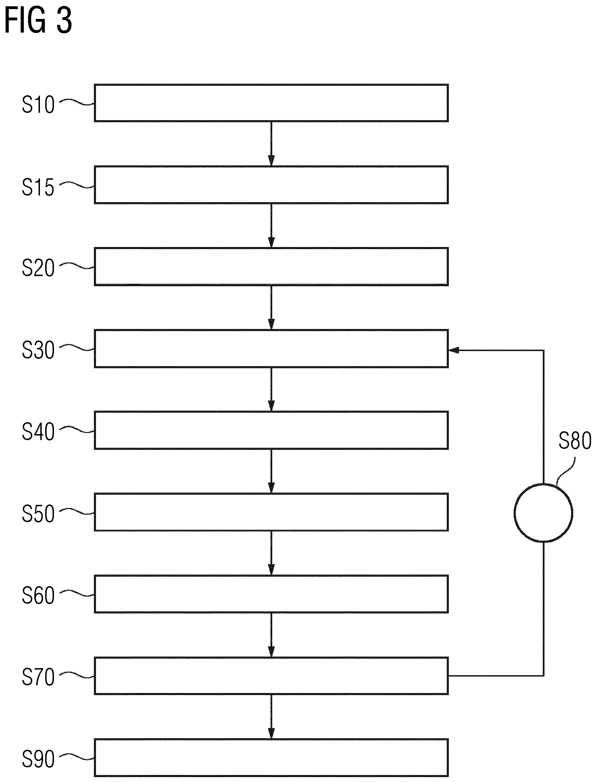

Figures 2 and 3 respectively depict a flowchart of a method for providing a trained function TFA which is adapted/configured to provide a classification result CR for a whole slide image WSI depicting tissue according to a plurality of tissue types HE, CA, OT. In other words, Figures 2 and 3 show methods for training a trained function TF1, TF2, TFA for classifying tissue depicted in whole slide images according to a plurality of tissue types. While Figure 2 illustrates the basic workflow, Figure 3 illustrates the iterative repetition of some of the steps in an iterative teacher-student-workflow. Optional steps of Figure 2 may likewise be carried out within the method of Figure 3 even if not explicitly mentioned or shown in Figure 3. The methods comprise several steps. The order of the steps does not necessarily correspond to the numbering of the steps but may also vary between different embodiments of the present invention. Further, individual steps or a sequence of steps may be repeated.

At step S10, a set of whole slide images WSI_T is provided (subsequently also denoted as "training set" or just "set"). The classification status of the whole slide images WSI_T may be unknown. For example, the whole-slide images WSI_T may be loaded from a picture archiving system 13 or another database. The whole-slide image WSI_T of the set may be acquired using a microscope, e.g., in a laboratory process. The whole-slide images of the set WSI_T may be acquired using various imaging modalities, e.g., fluorescence of stained tissue samples or tissue slides, etc. In particular, the whole-slide images WSI_T obtained depict a tissue slice stained with a H&E stain.

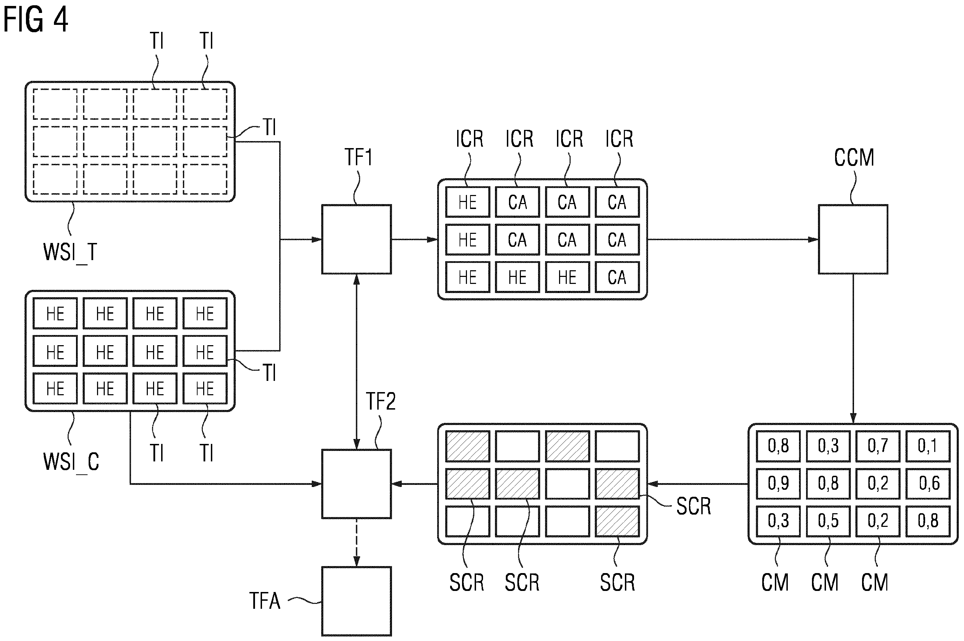

Optionally, at Step S11, a plurality of tiles TI may be defined in each whole slide image WSI_T of the set, in order to improve the handling of the image data comprised in each whole slide image WSI_T. To allow for a more instructive representation of the data streams, Figure 4 illustrates a tile-wise processing of the input WSIs. It should be clear however, that each tile TI may show a plurality of different tissue types. Accordingly, a classification result does not have to be uniform for the individual tiles TI.

At optional step S15, a plurality of comparative whole slide images WSI_C is provided. The comparative whole slide images WSI_C may generally have known tissue types. For instance, comparative whole slide images WSI_C may comprise verified annotations setting out different tissue types. According to other examples, the comparative whole slide images WSI_C may uniformly show tissue of one tissue type only, in particular, healthy tissue. Like the whole slide images WSI_T of the training set, the comparative whole slide images WSI_C may respectively be divided into a plurality of tiles TI.

At step S20, a first trained function TF1 is provided. The first trained function TF1 is configured to provide a classification result for a whole slide image WSI depicting tissue according to a plurality of tissue types HE, CA, OT. Further, a second trained function TF2 is provided at step S20. Like the first trained function TF1, the second trained function TF2 is configured to provide a classification result CR for a whole slide image WSI depicting tissue according to a plurality of tissue types HE, CA, OT. First and second trained functions may be different in the basic function architecture and/or the training status.

Various examples disclosed herein are described in the practical example of a machine-learning segmentation algorithm as first and second trained function TF1, TF2 that segments a whole-slide image WSI. This means that image regions of a whole-slide image WSI that include tissue of a certain type are delimited by a respective segmentation mask defining the segments (c.f., Figure 1). Multiple segments can be determined. Different segments can be associated with tissue of different types.

Accordingly, the first and second trained functions TF1, TF2 may be respectively implemented as a classification algorithm configured to classify image regions, e.g., patches, of whole slide images WSI, WSI_T, WSI_C in accordance with the types HE, CA, OT indicated by the image data. In particular, the segmentation algorithm first and second trained functions TF1, TF2 may be configured to classify cells depicted in the whole-slide images WSI, WSI_T, WSI_C in accordance with different types HE, CA, OT as indicated by the image data of whole slide images WSI, WSI_T, WSI_C.

There are different implementations for the first and second trained functions TF1, TF2 possible all of which are included in this disclosure. For instance, it would be possible to employ a CNN as segmentation algorithm. For instance, ResNet-18 may be used, see Ayyachamy, Swarnambiga, et al. "Medical image retrieval using Resnet-18." Medical Imaging 2019: Imaging Informatics for Healthcare, Research, and Applications. Vol. 10954. International Society for Optics and Photonics, 2019. A VGG-16 or VGG-19 CNN could be used, see: Mateen, Muhammad, et al. "Fundus image classification using VGG-19 architecture with PCA and SVD." Symmetry 11.1 (2019): 1; or Kaur, Taranjit, and Tapan Kumar Gandhi. "Automated brain image classification based on VGG-16 and transfer learning." 2019 International Conference on Information Technology (ICIT). IEEE, 2019.

At step S30, intermediate classification results ICR are generated by inputting the set of whole slide images WSI_T into the first trained function TF1. Optionally, at step S30, also the comparative whole slide images WSI_T may be input into the first trained function TF1. Intermediate classifications ICR may assign a tissue type HE, CA, OT to image data of the whole slide images WSI_T, WSI_C

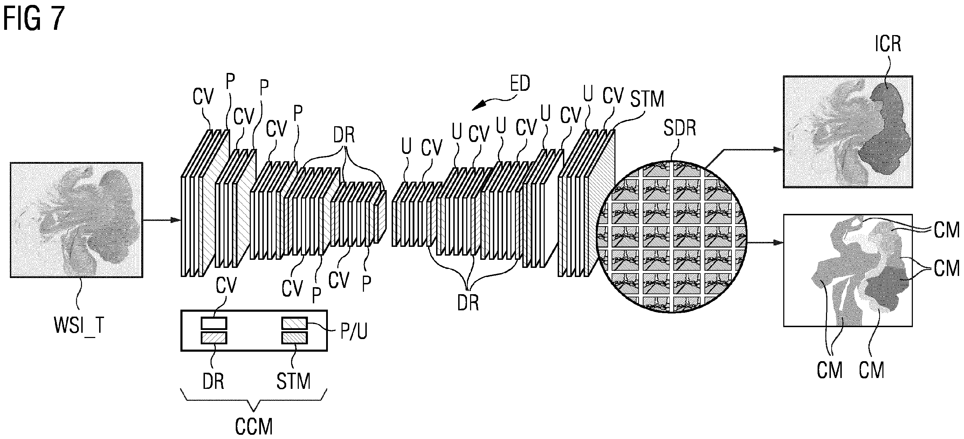

Optionally, step S30 may comprise generating a certainty measure CM for each intermediate classification result ICR at optional step S31. A certainty measure CM may indicate how confident a certain intermediate classification result ICR is. For example, certainty measures CM may be real numbers selected from an interval from 0 to 1. As will be further explained in connection with Figure 7, certainty measures CM may be provided by a dedicated certainty calculation module CCM.

At step S40, a subset of the intermediate classification results ICR is selected for training the second trained function TF2. Specifically, at step S40, those intermediate classification results ICR with higher certainty measures CM may be selected as selected classification results SCR. For instance, those intermediate classification results ICR the certainty measures CM of which is above a predetermined threshold are selected.

At step S50 the image data of the whole slide images WSI_T from the set corresponding to the selected classification results are input into the second trained function TF2 with the aim to respectively generate a predictive classification result. Optionally, if available, image data from comparative whole slide images WSI_C may be input into the second trained function TF2 alongside the selected classification results (optional step S51). Accordingly, the image data from the comparative whole slide images WSI_C may likewise lead to predictive classification results.

Step S60 is devoted to (further) train the second trained function TF2. Generally speaking, a further training may be provided for by comparing the predictive classification results with the selected classification results SCR and, if available, the known tissue type of the comparative whole slide images WSI_C. As the comparison gives an indication of how well the second trained function TF2 performs, the second trained function TF2 may be tuned on that basis.

More specifically, a loss may be calculated for corresponding pairs of the selected classification results SCR and the predictive classification results by employing an appropriate loss function (optional step S61). Optionally, it is furthermore possible, to weigh the losses thus calculated based on the certainty measures CM (optional step S62). For instance, losses with higher certainty measures CM may be weighted higher than losses with lower certainty measures CM.

That followed, the adapted second trained function TF2 may be provided as the output TFA of the workflow. This may involve making the adapted trained function TFA available for inference. For instance, the adapted trained function TFA may be stored in an appropriate storage 93 from which it can be downloaded and/or called for classifying whole slide images WSI, WSI_T, WSI_C.

Rather than directly providing the adapted second trained function TF2, according to the alternative shown in Figure 3, it is also proposed to replace the first trained function TF1 with the adapted second trained function TFA and, in turn, let the first trained function TF1 take the role of the second trained function TF2. In other words, the adapted second trained function TFA becomes the (new) first trained function TF1, and the (former) first trained function TF1 becomes the (new) second trained function TF2. Swapping the trained functions is subject of step S70.

That followed, at step S80, the steps of generating intermediate classification results ICR, selecting selected classification results SCR, inputting the selected classification results SCR into the second trained function TF2, and training the second trained function TF2 may be repeated with swapped roles of first and second trained functions TF1, TF2.

Optionally, the exchange of first and second trained function of step S70 and the repetition of the results generation, selection, and training of step S80 may be iteratively repeated multiple times.

Optionally, step S70 may comprise a dropout stage configured to estimate whether the current (adapted) second trained function TF2 performs significantly well. If so, it may be provided as adapted trained function TFA. If not, the second trained function TF2 may take the place of the first trained function TF1 and vice versa and steps S30-S60 may be repeated. There may be as many iterations as required until the respectively last generation of the adapted trained function TFA shows an acceptable performance.

In Figure 4, some data streams in connection with the methods of Figures 2 and 3 are shown.

Basically, embodiments build on three building blocks which may be arbitrarily used and combined.
(i) The utilization of comparative whole slide images WSI_C, e.g., in the form of fully healthy samples which may, e.g., be collected from the surgical resection margins.
(ii) Teacher-Student models for enabling the second trained function TF2 to learn from weakly annotated data as provided by the first trained function TF1.
(iii) Uncertainty evaluation in order to select the most promising training data.

In particular, the inventor observed that healthy slides provide plenty and feature rich data for healthy tissue. The trained functions TF1, TF2 are therefore able to securely learn to recognize visual patterns indicating healthy tissue HE on that basis. Compared to that, diagnostic slides of the set of whole slide images WSI_T contain a mixture of healthy HE and non-healthy tissue CA, with which the trained functions can learn to actively recognize non-healthy tissue CA. All tiles or, more generally, image data obtained from healthy slides can be treated as known healthy tissue (e.g., negative examples). Image data obtained from diagnostic slides are treated as noisy (positive) labels since it is a priori unknown whether they show healthy HE or cancerous CA tissue. On that basis, a classification with rejection may be used for the unknown image data, such as a Bayesian aleatoric loss.

If used in conjunction with a teacher-student-workflow, the teacher model TF1 may then predict a segmentation for all image data. Uncertainty measures, e.g., in the form of Bayesian uncertainty masks, may be computed for that image data. Specifically, Bayesian uncertainty masks may indicate pixels with high certainty and only those may be utilized for further training of the student TF2. Bayesian uncertainty masks may be computed by a certainty calculation module CCM - which, for the sake of easy reference, is shown as separate element in Figure 4. However, the certainty calculation module CCM can likewise be integrated in the respective trained functions TF1, TF2 and corresponding embodiments are likewise part of the disclosure and the scope of corresponding claims unless explicitly stated otherwise.

Generally, the student TF2 may be trained with image data sampled from high certainty regions, in particular, regions with cancerous CA tissue, and image data from the comparative whole slide images WSI_C as negative examples. Further, there is the option to weigh the loss upon training of the student TF2 proportional to the uncertainty CM associated with the corresponding image data.

As a further aspect, the procedure may be iterated where the output of the student TF2 is used to train the next teacher model TF1. Before deployment as final trained function TFA, a fine-tuning may be carried out for which only image data is used which scores very high in terms of the certainty measures CM.

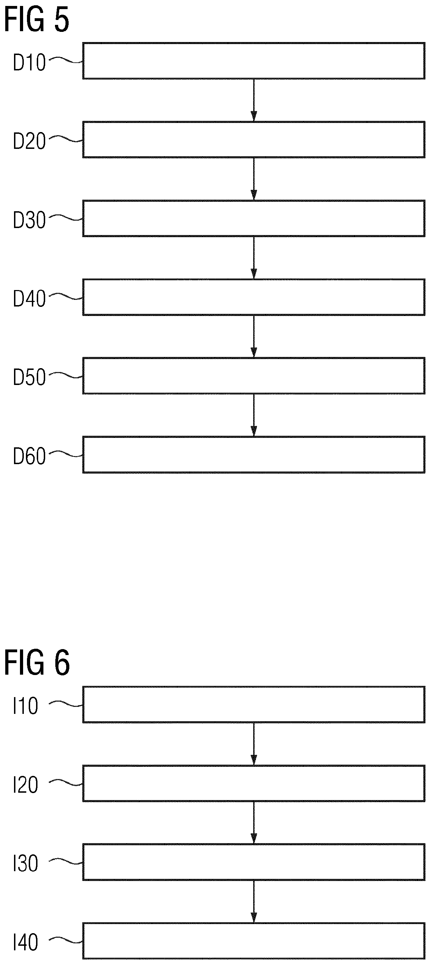

Figure 5 depicts a flowchart of a method for providing training data for training a trained function TF1, TF2 configured to provide a classification result CR for a whole slide image WSI depicting tissue according to a plurality of tissue types HE, CA, OT. The method comprises several steps. The order of the steps does not necessarily correspond to the numbering of the steps but may also vary between different embodiments of the present invention. Further, individual steps or a sequence of steps may be repeated.

At step D10, a set of whole slide images WSI_T depicting tissue of unknown tissue types HE, CA, OT is obtained. At step D20, a first trained function TF1 is provided. The first trained function TF1 is configured to provide a classification CR result for a whole slide image WSI depicting tissue according to a plurality of tissue types HE, CA, OT. For instance, the first trained function TF1 may be downloaded from a repository and hosted at a computing unit 92 carrying out the method. At step D30 intermediate classification results ICR are generated by applying the first trained function TF1 to the set of whole slide images WSI_T essentially as described in connection with step S30. At step D40, classification results SCR from the intermediate classification results ICR are selected essentially as described in connection with step S40. At step D50, the training data based on the selected classification results SCR and corresponding image data extracted from the whole slide images WSI_T is provided.

Optionally, the method may further comprise a step D60 of obtaining comparative image data of known tissue type HE, wherein the training data is additionally provided based on the comparative image data and a corresponding classification result indicating the known tissue type HE.

Figure 6 is a flowchart of a method for providing a classification result CR for a whole slide image WSI depicting tissue according to a plurality of tissue types HE, CA, OT. The method comprises several steps. The order of the steps does not necessarily correspond to the numbering of the steps but may also vary between different embodiments of the present invention. Further, individual steps or a sequence of steps may be repeated.

At step I10, a trained function TFA is provided. This may include training the training function TFA as herein described, in particular, with the method steps as described in conjunction with Figures 2 to 4. According to some examples, the trained function TFA may, as part of step I10, be downloaded from a repository and have been trained by the methods as herein described.

At step I20, a whole-slide image WSI is obtained (c.f. Figure 1). For example, the whole-slide image WSI may be loaded from a picture archiving system 13 or another database or otherwise provided by a user U. The whole-slide image WSI may be of the same kind as the whole slide images of the training set WSI_T.

At step 130, the trained function TFA is used for inference tasks as part of a digital pathology workflow. This means that the whole-slide image WSI may be input to the trained function TFA to thereby obtain a classification result CR. Based on this classification result CR, it would be possible to detect tumor-type tissue CA in the whole-slide image WSI.

At step 140, the classification result CR is provided. This may involve displaying the classification result CR in a user interface 11, for instance, as an overlay over the underlying whole slide image WSI as shown in Figure 1.

Figure 7 shows a trained function TF1 with integrated certainty calculation functionality CCM. Specifically, the function TF1 is based on a Bayesian segmentation with Monte Carlo Dropout. On the left side of Figure 7, an input whole slide image WSI_T is symbolized which is input to a convolutional encoder-decoder ED. The convolutional encoder-decoder ED comprises a plurality of convolutional layers, batch normalisation layers and rectified linear activation function layers which are marked with the reference sign CV and by a white surface. These layers form different stages, also named convolutional block, with different resolutions of features. Different resolutions are symbolized by different sizes of the layers. A new stage with a lower resolution (on the left side of the convolutional encoder-decoder ED) is generated using a pooling layer P (on the left side) and a new stage with a higher resolution (on the right side of the convolutional encoder-decoder ED) is generated using an upsampling layer U (on the right side).

Further, some dropout layers DR are each inserted between a pooling layer P and following convolutional layers CV or between a pooling layer P and an upsampling layer U or between a convolutional layer CV and an upsampling layer U. The dropout layers DR add dropout after each convolutional block. These dropouts are used to determine a sample variance as an uncertainty metric. Further, in the end, a normalisation is executed by a so called Softmax-layer STM. Then, a stochastic dropout SDR is performed to get stochastic dropout samples. A mean value of the stochastic dropout samples is used for determining a classification result CR and a variance of the stochastic dropout samples is used for determining an uncertainty model including uncertainty regions so as to obtain a certainty measure CM for individual regions of the image data processed. In the example of Figure 7, lighter regions indicate more uncertain regions with lower certainty measures CM.

The example of Figure 7 implements a Monte Carlo Dropout scheme in which the certainty calculation module CCM is integrated in the trained function in the form of the dropout layers DR, the Softmax-layer STM and the stochastic dropout SDR. With that, dropout regularization is leveraged to produce more reliable predictions and estimate prediction certainty measures CM. However, there are also other implementations possible, in which the certainty calculation module CCM is more separated from the actual trained function TF1, e.g., in the form of an independent module processing the output of the trained function and/or the raw input data of the trained function so as to estimate certainty measures CM.

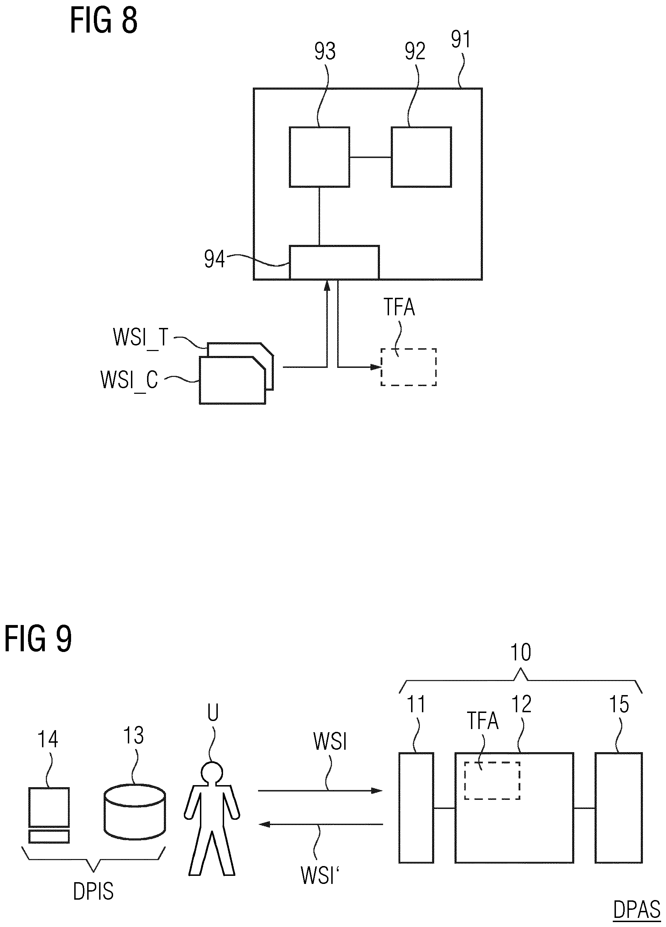

Figure 8 schematically depicts a system 91 according to various examples. The system 91 includes a processor 92 (computing unit) that is coupled to a memory 93. The processor 92 can load program code from the memory 93. The processor 92 can execute the program code. The processor 92 can also communicate with other devices and/or databases via an interface 94 (interface unit). For instance, the processor 92 could receive whole-slide images WSI_T with unknown content and/or comparative whole slide images WSI_C with known tissue types for training trained functions TF1, TF2 in order to provide a trained function TFA for deployment.

The processor 92 can be configured (e.g., by loading corresponding program code from the memory 93) to input the whole slide images WSI_T, WSI_C into one of the trained functions TF1 so as to generate intermediate classification results ICR in an unsupervised manner. The classification results CR may comprise sematic information associated with the whole-slide images WSI_T, WSI_C. The semantic information could, e.g., include a segmentation result according to a plurality of tissue types HE, CA, OT depicted in whole slide images WSI_T, WSI_C.

The processor 92 might further be configured (e.g., by loading corresponding program code from the memory 93) to select, from these intermediate classification results ICR, classification results SCR which are suited for training a second trained function TF2. In particular, the processor 92 might be configured to compute a certainty measure CM for each intermediate classification result ICR and select classifications results SCR based on these certainty measures CM.

Further, processor 92 may be configured (e.g., by loading corresponding program code from the memory 93) to input image data corresponding to the selected classification results SCR into the second trained function TF2 so as to generate predictive classification results. Processor may be further configured (e.g., by loading corresponding program code from the memory 93) to adapt the second trained function TF2 based on a comparison of the predicted classification results and the selected classification results SCR which act as ground truth in the training process of the second trained function TF2. Training the second trained function TF2 may involve setting parameters of the second trained function TF2, e.g., using backpropagation or another training optimization minimizing a loss value of a loss function.

Processor 92 may be further configured (e.g., by loading corresponding program code from the memory 93) to inject comparative whole slide images WSI_C as further training data into the training process of the second trained function, wherein the known tissue types of the comparative whole slide images WSI_C serve as ground truth labels.

Processor 92 may be further configured (e.g., by loading corresponding program code from the memory 93) to either provide the adapted second trained function TFA as output or exchange the adapted trained function TFA and the first trained function and iteratively repeat the training data selection and ground truth label generation in the new constellation. Optionally, processor 92 may be further configured (e.g., by loading corresponding program code from the memory 93) to repeat the exchange operation and the ensuing steps multiple times until the adapted trained function performs sufficiently well.

In Figure 9, a schematic view of an annotation assistance device 10 according to an embodiment of the invention is shown.

The annotation assistance device 10 comprises a communication interface 11. The communication device may be configured to interface with a human user U and/or various system components such as databases 13 or imaging modalities 14 such as slide scanners. I particular, the communication interface 11 may be set up for receiving a whole slide images WSI to be annotated. The whole slide image WSI may be received via up-load by a human user U or obtained from a database 13, e.g., based on a command entered by the user U in the communication interface 11. Further, whole slide images WSI may be received from a slide scanner 14 configured to acquire whole slide images WSI.

The database 13 and the slide scanner 14 alone or together may be referred to as or may be part of a digital pathology image system DPIS or digital pathology information system configured to acquire, store and/or forward whole-slide images WSI. The combination of the digital pathology image system DPIS and the annotation assistance system 10 may form a digital pathology image analysis system DPIA.

The annotation assistance device 10 also includes an application module or unit 12 for automatically processing the received whole slide images WSI. Specifically, the application device 12 is configured for automatically processing the received whole slide images WSI by inputting the whole slide images WSI into the trained function TFA in order to obtain a classification result CR.

That followed, the whole slide images WSI may be annotated based on the classification result CR with an accordingly configured annotation module or unit 15. For instance, the classification result may be overlayed over the original whole slide image so as to generate an annotated whole slide image WSI'. The annotated whole slide image may be provided to the user HE via communication interface 11.

Wherever meaningful, individual embodiments or their individual aspects and features can be combined or exchanged with one another without limiting or widening the scope of the present invention. Advantages which are described with respect to one embodiment of the present invention are, wherever applicable, also advantageous to other embodiments of the present invention. Independent of the grammatical term usage, individuals with male, female or other gender identities are included within the term.

## Claims

1. Computer-implemented method for providing a trained function (TFA) configured to provide a classification result (CR) for a whole slide image (WSI) depicting tissue according to a plurality of tissue types (HE, CA, OT), the method comprising:
- obtaining (S10) a set of whole slide images (WSI_T) depicting tissue of unknown tissue types,
- providing (S20) a first trained function (TF1) configured to provide a classification result for a whole slide image (WSI) depicting tissue according to a plurality of tissue types (HE, CA, OT),
- generating (S30) intermediate classification results (ICR) by inputting the set (WSI_T) into the first trained function (TF1),
- selecting (S40) classification results (SCR) from the intermediate classification results (ICR),
- providing (S20) a second trained function (TF2) configured to provide a classification result (CR) for a whole slide image (WSI) depicting tissue according to a plurality of tissue types (HE, CA, OT),
- inputting (S50) image data extracted from the set (WSI_T) corresponding to the selected classification results (SCR) into the second trained function (TF2) so as generate predictive classification results,
- adapting (S60) the second trained function (TF2) based on a comparison of the selected classification results (SCR) with the predictive classification results, and
- providing (S90) the adapted second trained function (TFA) as the trained function (TFA).

2. Method according to claim 1, further comprising, prior to the step of providing (S60) the trained function:
- replacing (S70) the first trained function (TF1) with the adapted trained function (TFA) so that the adapted trained function (TFA) becomes the first trained function (TF1), and the second trained function (TF2) with the first trained function (TF1) so that the first trained function (TF1) becomes the second trained function (TF2), and
- repeating (S80) the steps of:
- generating (S30) the intermediate classification results (ICR),
- selecting (S40) the selected classification results (SCR),
- inputting (S50) the image data, and
- adapting (S60) the second trained function (TF2).

3. Method according to any one of the preceding claims, further comprising
- obtaining (S15) a comparative set of whole slide images (WSI_C) of known tissue type (HE),
Wherein:
- the step of inputting (S50) image data comprises inputting (S51) image data extracted from the comparative set (WSI_C) into the second trained function (TF2) so as to generate further predictive classification results (PCR), and
- the step of adapting (S60) comprises adapting the second trained function (TF2) based on a comparison of the further predictive classification results (PCR) with the known tissue type (HE).

4. Method according to claim 3, wherein
- the known tissue type (HE) relates to healthy tissue.

5. Method according to any one of the preceding claims, wherein:
- the step of generating (S30) the intermediate classification results (ICR) further comprises obtaining (S31) certainty measures (CM) for the intermediate classification results (ICR), and
- in the step of selecting (S40), the selected classification results (SCR) are selected based on the certainty measures (CM).

6. Method according to any one of the preceding claims, wherein:
- the step of generating (S30) the intermediate classification results (ICR) further comprises obtaining (S31) certainty measures (CM) for the intermediate classification results (ICR), and
- in the step of adapting (S60), the second trained function (TF2) is additionally adapted based on the certainty measure (CM).

7. Method according to any of the claims 5 or 6, wherein
the step of obtaining (S31) the certainty measures comprises (CM):
- providing a trained certainty calculation module (CCM) configured to attribute a certainty measure (CM) to the intermediate classification results (ICR).

8. Method according to claim 7, wherein
- the certainty calculation module (CCM) comprises a Bayesian model.

9. Method according to any one of claims 7 or 8, wherein the certainty calculation module (CCM) comprises:
- a specialized spatial segmentation loss algorithm,
- a feature pyramid pooling algorithm,
- a Monte Carlo Dropout algorithm,
- a Monte Carlo Depth algorithm, and/or
- a Deep Ensemble algorithm.

10. Method according to any one of claims 7 to 9, wherein:
- the certainty calculation module (CCM) comprises a novelty detection algorithm configured to detect input and/or output parameters of the first trained function (TF1) which are underrepresented in the training of the first trained function (TF1), and
- the step of obtaining (S31) the certainty measures (CM) comprises computing the certainty measures (CM) based on the detection results of the novelty detection algorithm.

11. Method according to any one of the preceding claims, further comprising
- respectively defining (S11) a plurality of tiles (T) in the whole slide images of the set of whole slide images (WSI_T), wherein:
- the step of generating (S30) intermediate classification results (ICR) comprises generating an intermediate classification result (ICR) for each one of at least part of the tiles (T), and
- the step of inputting (S50) image data comprises inputting the image data of the tiles (T) corresponding to the selected classification results (SCR) into the second trained function (TF2).

12. Computer-implemented method for providing a classification result (CR) for a whole slide image (WSI) depicting tissue according to a plurality of tissue types (HE, CA, OT), the method comprising:
- providing (I10) a trained function (TFA) according to any one of the preceding claims,
- obtaining (I20) a whole slide image (WSI) to be classified,
- applying (I30) the trained function (TFA) to the whole slide image (WSI) so as to obtain a classification result (CR), and
- providing (I40) the classification result (CR).

13. System (91) for providing a trained function (TFA) configured to provide a classification result (CR) for a whole slide image (WSI) depicting tissue according to a plurality of tissue types (HE, CA, OT), the system (91) comprising an interface unit (94) and computing unit (92),
the interface unit (94) being configured to:
- receive (S10) a set of whole slide images (WSI_T) depicting tissue of unknown tissue types, and
the computing unit (92) being configured to:
- obtain (S20) a first trained function (TF1) configured to provide a classification result (CR) for a whole slide image (WSI) depicting tissue according to a plurality of tissue types (HE, CA, OT),
- generate (S30) intermediate classification results (ICR) by inputting the set (WSI_T) into the first trained function (TF1),
- select (S40) classification results (CR) from the intermediate classification results (ICR),
- obtain (S20) a second trained function (TF2) configured to provide a classification result (CR) for a whole slide image (WSI) depicting tissue according to a plurality of tissue types- (HE, CA, OT),
- input (S50) image data extracted from the set (WSI_T) corresponding to the selected classification results (SCR) into the second trained function (TF2) so as generate predictive classification results,
- adapt (S60) the second trained function (TF2) based on a comparison of the selected classification results (SCR) with the predictive classification results, and
- provide (S90) the adapted second trained function (TFA) as the trained function (TFA) via the interface unit (94).

14. Computer program product comprising program elements which induce a computing unit (92) of a system (91) to perform the steps according to the method of any of claims 1 to 12, when the program elements are loaded into a memory (93) of the computing unit (92).

15. Computer-readable medium (93) on which program elements are stored that are readable and executable by a computing unit (92) of a system (91) to perform steps of the method according to any of claims 1 to 12, when the program elements are executed by the computing unit (92).
